# EUROPÄISCHE PATENTSCHRIFT

(11) **EP 3 254 543 B1**
(45) Veröffentlichungstag und Bekanntmachung des Hinweises auf die Patenterteilung: **27.02.2019**
(21) Anmeldenummer: 17401052.0
(22) Anmeldetag: 19.05.2017
(51) Int. Cl.: A01B 21/08, A01B 61/04, A01C 5/06, A01C 7/20

(54) **WERKZEUGTRÄGER**
TOOL CARRIER
PORTE-OUTIL

(30) Priorität: 31.05.2016 DE 102016109986
(43) Veröffentlichungstag der Anmeldung: 13.12.2017
(73) Patentinhaber: Amazonen-Werke H. Dreyer GmbH & Co. KG, 49205 Hasbergen (DE)
(72) Erfinder: Tanke, Christian, 01723 Kesselsdorf (DE)

(56) Entgegenhaltungen:
- EP-A1- 1 541 003
- EP-A1- 2 807 910
- DE-A1-102009 058 342
- FR-A1- 2 097 035
- US-A- 2 648 184
- US-A- 4 846 084

## Beschreibung

Die Erfindung betrifft einen Werkzeugträger gemäß des Oberbegriffes des Patentanspruches 1.

Ein derartiger Werkzeugträger ist in EP 2 807 910 A1 beschrieben. Dieser bekannte Werkzeugträger ist aus einem Flanschelement und einem Längsträger zusammengesetzt. Der Längsträger ist insgesamt als rohrförmiger Hohlkörper ausgebildet und durch ein Hydroformingverfahren durch Aufweitung in seine gewünschte Form gebracht worden. So ist dieser Längsträger an seiner Stirnseite, die mit dem Flanschelement verbunden wird, durch das Hydroformingverfahren aufgeweitet. Anschließend sind an den aufrechten Seiten des Längsträger V-förmige Ausschnitte angebracht worden, so dass die V-förmige Ausschnitte aufweisende Stirnseite des Längsträger mit dem V-förmig ausgestalteten Flanschelement formschlüssig verbunden und verschweißt werden kann. Dieses Hydroformingverfahren ist sehr aufwändig und teuer.

Der Erfindung liegt die Aufgabe zu Grunde, eine vereinfachte Ausgestaltung des stirnseitigen Bereiches Längsträgers zur formschlüssigen Verbindung mit dem V-förmig ausgestalteten Flanschelement zu schaffen.

Diese Aufgabe der erfindungsgemäß dadurch gelöst, dass die gegenüberliegenden und nicht mit den V-förmigen Ausschnittskonturen versehenen Wände des Längsträgers zur Vergrößerung der V-förmigen Ausschnittskontur nach außen gebogen ausgebildet sind.

Infolge dieser Maßnahme wird der Längsträger an seiner stirnseitigen Seite zunächst V-förmig ausgeschnitten und dann werden die nicht mit den V-förmigen Ausschnittskonturen versehenen Wände des Längsträgers zur Vergrößerung der V-förmigen Ausschnittskontur nach außen gebogen. Hierdurch ergibt sich eine wesentlich vereinfachte Herstellung der stirnseitigen Verbindungsbereiches des Längsträgers. Hierdurch findet keine Veränderung der Materialstärke in diesen Bereichen des Längsträgers statt, so dass in diesem Bereich die Materialstärke annähernd gleich bleibt.

Um eine ausreichend große Länge der Verbindung des Längsträgers mit dem Flanschelement zu erhalten, ist vorgesehen, dass die gegenüberliegenden und nicht mit den V-förmigen Ausschnittskonturen versehenen Wände des Längsträgers zur Schaffung einer größeren Stirnfläche zur Verbindung mit der V-förmigen Kontur des Flanschelementes durch Streckung der stirnseitig nahen Wandbereiche des Längsträgers zur Schaffung eines größeren Flanschbereiches gestreckt ausgebildet sind. Hierdurch wird erreicht, dass sich eine ausreichend lange Schweißnahtverbindung zwischen der Stirnseite des Längsträgers und dem Flanschelement ergibt.

In kostengünstiger Weise ist vorgesehen, dass der Längsträger als Vierkantrohr ausgebildet ist. Hierdurch können einfache auf dem Markt befindliche und erhältliche Vierkantrohre für den Längsträger verwendet werden.

In bevorzugter Weise vorgesehen, dass die V-förmigen Ausschnittskonturen in den aufrecht verlaufenden Wänden des Längsträgers angeordnet sind.

In einer anderen Ausgestaltung bei einem anderen Einsatzfall ist vorgesehen, dass die V-förmigen Ausschnittskonturen in den zumindest annähernd horizontal verlaufenden Wänden des Längsträgers angeordnet sind.

Weitere Einzelheiten der Erfindung sind der Beispielsbeschreibung und den Zeichnungen zu entnehmen. Die Zeichnungen zeigen
- Fig.1: den bei einem Säschar eingesetzten Werkzeugträger in perspektivischer Darstellung,

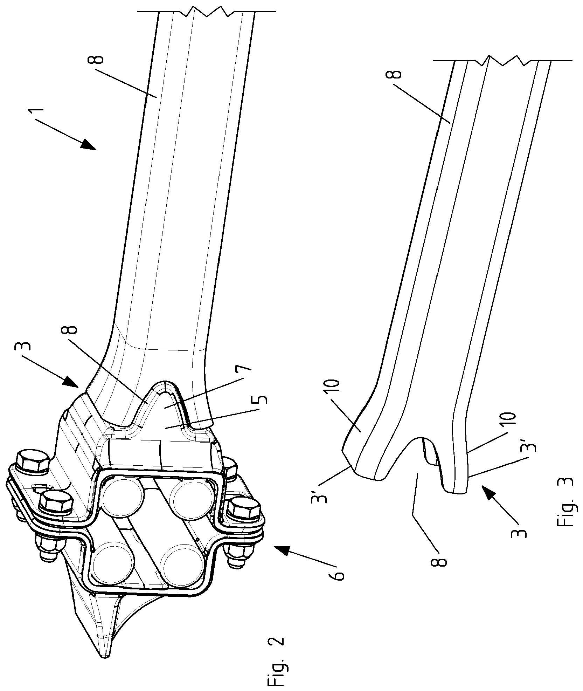

- Fig.2: den vorderen Bereich des Werkzeugträgers im vergrößerten Maßstab und in perspektivischer Darstellung,
- Fig.3: den vorderen Bereich des Längsträgers des Werkzeugträgers in der Darstellungsweise gemäß Fig.2,

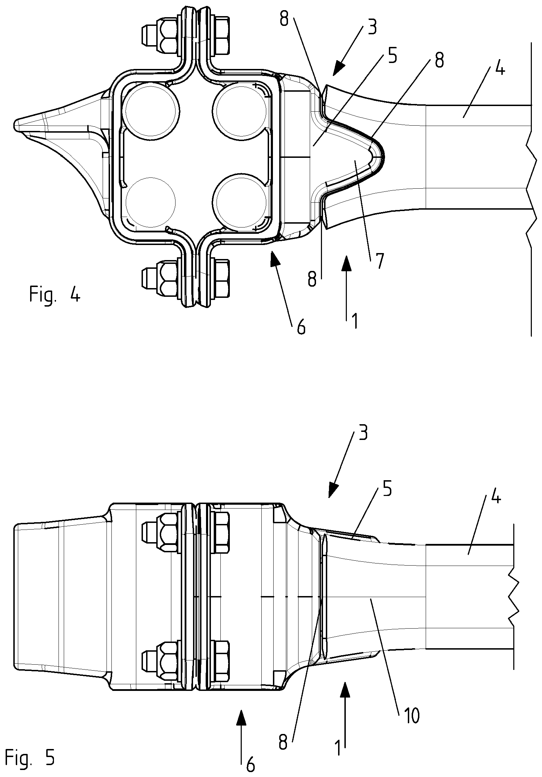

- Fig.4: den vorderen Bereich des Werkzeugträgers in Seitenansicht,
- Fig.5: den vorderen Bereich des Werkzeugträgers in Draufsicht,
- Fig.6: den stirnseitigen Bereich des Längsträger vor dem nach außen Biegen der nicht mit den V-förmigen Ausschnittskonturen versehenen Wände des Längsträgers zur Vergrößerung der V-förmigen Ausschnittskontur und dem Biegewerkzeug in Seitenansicht,
- Fig.7: die Anfangsphase des nach außen Biegens der stirnseitigen Wandbereiche durch das Biegewerkzeug in Seitenansicht und
- Fig.8: die Endphase des nach außen Biegens der stirnseitigen Wandbereiche durch das Biegewerkzeug in Seitenansicht.

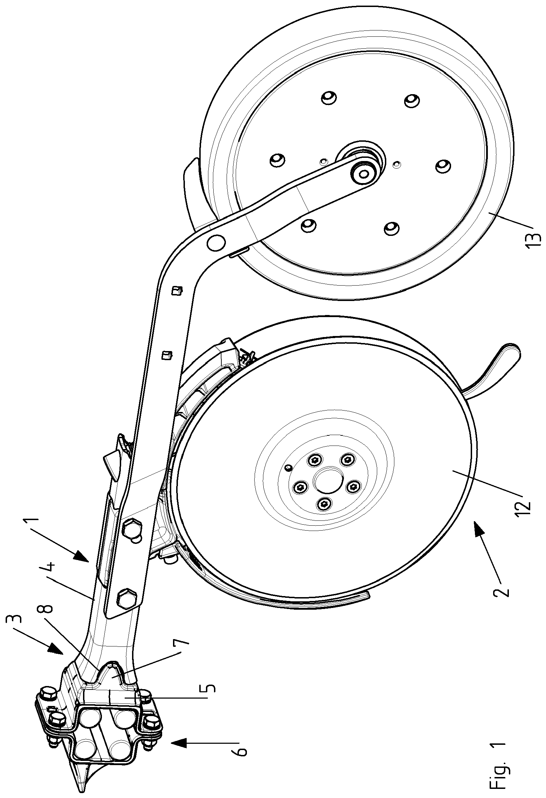

Der Werkzeugträger 1 ist Bestandteil des in Fig.1 dargestellten Säschares 2 für eine nicht dargestellte Sämaschine. Der Werkzeugträger 1 ist aus einem an der vorderen Stirnseite 3 eines Längsträgers 4 angeordneten Flanschelement 5 und einem Längsträger 4 zusammengesetzt. An dem Flanschelement 5 des Werkzeugträgers 1 ist ein Lagerelement 6 zur Anordnung des Werkzeugträgers 1 in bekannter Weise an einem nicht dargestellten quer zur Arbeitsrichtung verlaufenden als Querträger ausgebildeten Scharschiene angeordnet.

Das Flanschelement 5 des Lagerelementes 6 wird mit der Stirnseite 3 des Längsträgers 4 verbunden. Hierzu weist das Flanschelement 5 auf seiner dem Längsträger 4 zugewandten Seite die V-förmige Kontur 7 auf. Um die Stirnseite 3 des Längsträgers 4 mit der V-förmigen Kontur 7 des Flanschelementes 5 verbinden zu können, weist diese Stirnseite 3 die aufgebogene V-förmige Ausschnittskontur 8 auf. Über die aufgebogene V-förmige Ausschnittskontur 8 des Längsträgers 4 und der V-förmigen des Flanschelement des 5 werden das Flanschelement 5 und der Längsträger 4 zueinander formschlüssig positioniert. Anschließend werden das Flanschelement 5 und der Längsträger 4 im Bereich der stirnseitigen Kontur des Längsträgers 4 und der aufgebogenen V-förmigen Ausschnittskontur 8 miteinander durch eine nicht dargestellte Schweißnaht in den Kontaktbereich 9 zwischen dem Flanschelement 5 und der Stirnseite 3 verschweißt.

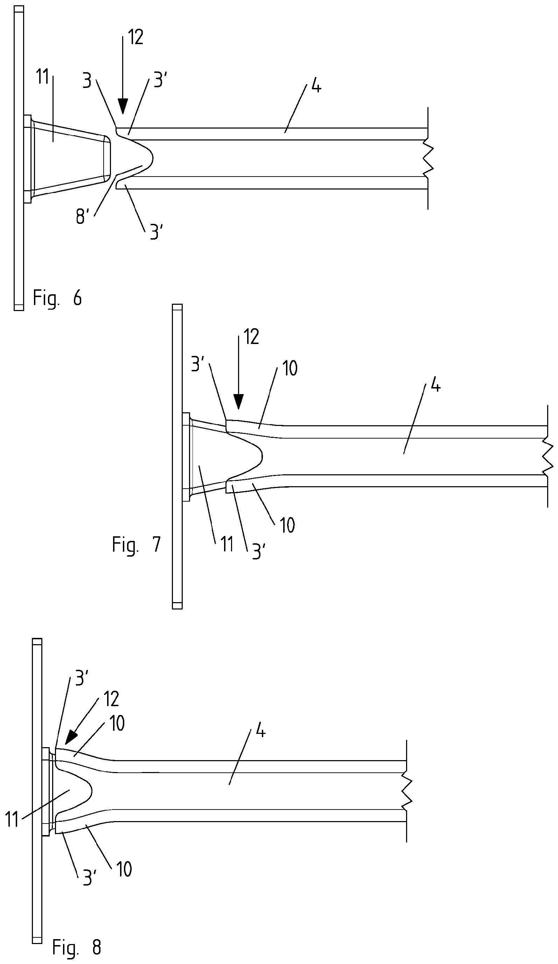

Zur Schaffung der aufgebogenen V-förmigen Ausschnittskontur 8 an der Stirnseite 3 des Längsträgers 4 wird das als Vierkantrohr zunächst durch einen Schneidevorgang zwei gegenüberliegenden Wänden des Längsträgers 4 mit jeweils einem V-förmigen Ausschnitt 8 versehen, wie Fig.6 zeigt. Anschließend werden die stirnseitigen Bereiche 3 des Längsträgers 4 an den gegenüberliegenden und nicht mit den V-förmigen Ausschnittskonturen versehenen Wände 10 des Längsträgers 4 zur Vergrößerung der V-förmigen Ausschnittskontur 8 nach außen aufgebogen, wie die Fig. 7 und 8 den Aufbiegevorgang zeigen. Hierzu wird, wie die Fig. 6 bis 8 zeigen, ein entsprechender Aufbiegedorn 11 in den stirnseitigen Endbereich 12 des als Vierkantrohr ausgebildeten Längsträgers 4 hineingedrückt. Gleichzeitig werden zur Vergrößerung der Schweißnahtlänge die gegenüberliegenden und nicht mit den V-förmigen Ausschnittskonturen versehenen Wände 10 des Längsträgers 4 zur Schaffung einer größeren Stirnfläche zur Verbindung mit der V-förmigen Kontur des Flanschelementes 7 durch Streckung der stirnseitig nahen Wandbereiche 10 des Längsträgers 4 zur Schaffung eines größeren Flanschbereiches gestreckt. Bei dem dargestellten Ausführungsbeispiel des Werkzeugträgers des Säschares 2 sind die V-förmigen Ausschnittskonturen 8 in den aufrecht verlaufenden Wänden des Längsträgers 4 angeordnet.

Um den Werkzeugträger, der zumindest aus dem Flanschelement 5 des Lagerelementes 6 und dem Längsträger 4 besteht, herzustellen, werden die Stirnseite des Längsträgers 4 über die aufgebogene V-förmige Ausschnittskontur 8 und die V-förmige Kontur 7 des Flanschelementes 5 formschlüssig zusammengefügt und an der stirnseitigen umlaufenden Kontur 8 des Längsträgers 4 mit dem Flanschelement 5 durch eine Schweißnaht verbunden.

An dem hinteren Ende des Längsträgers 4 ist entsprechend dem Ausführungsbeispiel nach Fig.1 über Verbindungselemente das als Doppelscheibenschar 12 ausgebildete Säschar 2 mit der nach laufenden Tiefenführungsrollen 13 angeordnet.

Der Werkzeugträger kann auch für als Grubberschare ausgebildete oder sonstige Bodenbearbeitungswerkzeuge Verwendung finden.

In nicht dargestellter Weise ist es bei entsprechenden Anforderungen auch möglich, die V-förmigen Ausschnittskonturen 8 in den zumindest annähernd horizontal verlaufenden Wänden des Längsträgers 4 anzuordnen.

## Patentansprüche

1. Werkzeugträger (1) für eine landwirtschaftliche Maschine zum Ausbringen von Saatgut und/oder Dünger oder zur Bodenbearbeitung, an dem Werkzeuge (13) und/oder Scharelemente (2,12) angeordnet sind und der Werkzeugträger (1) zumindest aus einem Flanschelement (5) und einem Längsträger (4) zusammengesetzt ist, wobei das zumindest eine Flanschelement (5) an die vordere Stirnseite (3) des zumindest einen Längsträger (4) angebracht ist, wobei das Flanschelement (5) zur Verbindung mit dem Längsträger (4) eine zumindest annähernde V-förmige Kontur (7) aufweist, wobei der Längsträger (4) auf der dem Flanschelement (5) zugewandten Stirnseite (3) eine an die V-förmige Kontur (7) des Flanschelementes (5) angepasste V-förmige Ausschnittskontur (8) aufweist, wobei das Flanschelement (5) und der Längsträger (4) über diese V-förmigen Konturen (7,8) gegenseitig zueinander positioniert werden und miteinander verschweißt sind, wobei der Längsträger (4) als Vierkantrohr mit parallel zueinander verlaufenden horizontalen und vertikalen Wänden ausgebildet ist, **dadurch gekennzeichnet, dass** die gegenüberliegenden und nicht mit den V-förmigen Ausschnittskonturen (8) versehenen Wände (10) des Längsträgers zur Vergrößerung der V-förmigen Ausschnittskontur (8) nach außen gebogen ausgebildet sind.

2. Werkzeugträger (1) nach Anspruch1, **dadurch gekennzeichnet, dass** die gegenüberliegenden und nicht mit den V-förmigen Ausschnittskonturen (8) versehenen Wände (10) des Längsträgers (4) zur Schaffung einer größeren Stirnfläche zur Verbindung mit der V-förmigen Kontur (7) des Flanschelementes (5) durch Streckung der stirnseitig nahen Wandbereiche des Längsträgers (4) zur Schaffung eines größeren Flanschbereiches gestreckt ausgebildet sind.

3. Werkzeugträger (1) nach zumindest einem der vorstehenden Ansprüche, **dadurch gekennzeichnet, dass** der Längsträger (4) als Vierkantrohr ausgebildet ist.

4. Werkzeugträger (1) nach zumindest einem der vorstehenden Ansprüche, **dadurch gekennzeichnet, dass** die V-förmigen Ausschnittskonturen (8) in den aufrecht verlaufenden Wänden des Längsträgers (4) angeordnet sind.

5. Werkzeugträger (1) nach zumindest einem der vorstehenden Ansprüche 1 bis 3, **dadurch gekennzeichnet, dass** die V-förmigen Ausschnittskonturen (8) in den zumindest annähernd horizontal verlaufenden Wänden des Längsträgers (4) angeordnet sind.

## Claims

1. Tool carrier (1) for an agricultural machine for dispensing seed and/or fertilizer or for soil cultivation, on which tools (13) and/or coulter elements (2, 12) are arranged and the tool carrier (1) is assembled at least from a flange element (5) and a longitudinal member (4), wherein the at least one flange element (5) is attached to the front end side (3) of the at least one longitudinal member (4), wherein, in order to be connected to the longitudinal member (4), the flange element (5) has an at least approximately V-shaped contour (7), wherein the longitudinal member (4) has, on the end side (3) facing the flange element (5), a V-shaped cutout contour (8) that matches the V-shaped contour (7) of the flange element (5), wherein the flange element (5) and the longitudinal member (4) are positioned facing one another via these V-shaped contours (7, 8) and are welded together, wherein the longitudinal member (4) is in the form of a square tube having horizontal and vertical walls extending parallel to one another, **characterized in that** the opposite walls (10), not provided with the V-shaped cutout contours (8), of the longitudinal member are formed in an outwardly curved manner in order to enlarge the V-shaped cutout contour (8).

2. Tool carrier (1) according to Claim 1, **characterized in that** the opposite walls (10), not provided with the V-shaped cutout contour (8), of the longitudinal member (4) are formed in an elongated manner in order to create a larger end face for connecting to the V-shaped contour (7) of the flange element (5) by elongating the wall regions, close to the end side, of the longitudinal carrier (4) in order to create a larger flange region.

3. Tool carrier (1) according to at least one of the preceding claims, **characterized in that** the longitudinal member (4) is in the form of a square tube.

4. Tool carrier (1) according to at least one of the preceding claims, **characterized in that** the V-shaped cutout contours (8) are arranged in the vertically extending walls of the longitudinal member (4).

5. Tool carrier (1) according to at least one of the preceding Claims 1 to 3, **characterized in that** the V-shaped cutout contours (8) are arranged in the at least approximately horizontally extending walls of the longitudinal member (4).

## Revendications

1. Porte-outil (1) pour une machine agricole pour épandre des semences et/ou de l'engrais ou pour le travail du sol, sur lequel sont disposés des outils (13) et/ou des éléments de charrue (2, 12), le porte-outil (1) étant constitué d'au moins un élément de bride (5) et d'au moins un longeron (4), l'au moins un élément de bride (5) étant monté sur le côté frontal avant (3) de l'au moins un longeron (4), l'élément de bride (5) présentant un contour au moins approximativement en forme de V (7) pour le raccordement au longeron (4), le longeron (4) présentant, sur le côté frontal (3) tournée vers l'élément de bride (5), un contour de section en forme de V (8) adapté au contour en forme de V (7) de l'élément de bride (5), l'élément de bride (5) et le longeron (4) étant positionnés en regard l'un de l'autre et étant soudés l'un à l'autre par le biais de ces contours en forme de V (7, 8), le longeron (4) étant réalisé sous forme de tube carré avec des parois horizontales et verticales s'étendant parallèlement les unes aux autres,
**caractérisé en ce que** les parois (10) opposées et non pourvues de contours de section en forme de V (8) du longeron sont réalisées sous forme courbée vers l'extérieur pour augmenter le contour de section en forme de V (8).

2. Porte-outil (1) selon la revendication 1, **caractérisé en ce que** les parois (10) opposées et non pourvues de contours de section en forme de V (8) du longeron (4) sont réalisées sous forme étirée pour former une plus grande surface frontale pour le raccordement au contour en forme de V (7) de l'élément de bride (5) par étirement des régions de paroi du longeron (4) proches du côté frontal afin de former une plus grande région de bride.

3. Porte-outil (1) selon au moins l'une quelconque des revendications précédentes, **caractérisé en ce que** le longeron (4) est réalisé sous forme de tube carré.

4. Porte-outil (1) selon au moins l'une quelconque des revendications précédentes, **caractérisé en ce que** les contours de section en forme de V (8) sont disposés dans les parois du longeron (4) s'étendant verticalement.

5. Porte-outil (1) selon au moins l'une quelconque des revendications précédentes 1 à 3, **caractérisé en ce que** les contours de section en forme de V (8) sont disposés dans les parois du longeron (4) s'étendant au moins approximativement horizontalement.
